Europäisches Patentamt

European Patent Office

Office européen des brevets

(19)

(11) Numéro de publication: **0 030 877**

**A1**

# DEMANDE DE BREVET EUROPEEN

(21) Numéro de dépôt: **80401662.4**

(22) Date de dépôt: **20.11.80**

(51) Int. Cl.³: **F 16 C 32/06**

(30) Priorité: **07.12.79 FR 7930143**

(43) Date de publication de la demande:
**24.06.81 Bulletin 81/25**

(84) Etats Contractants Désignés:
**DE GB IT NL SE**

(71) Demandeur: **ROLLIX DEFONTAINE Société Anonyme dite:**
**44, Boulevard Jules Verne**
**F-44300 Nantes(FR)**

(72) Inventeur: **Martin, Jean Pierre H.**
**23, rue de Bel Air**
**F-85600 Montaigu(FR)**

(72) Inventeur: **Labouere, Daniel J.**
**La Plauderie**
**Boussay F-44190 Clisson(FR)**

(74) Mandataire: **Moulines, Pierre et al,**
**Cabinet BEAU de LOMENIE 55, rue d'Amsterdam**
**F-75008 Paris(FR)**

(54) **Perfectionnement aux dispositifs rotatifs notamment aux couronnes d'orientation.**

(57) Un dispositif rotatif, notamment une couronne d'orientation, comporte une bague intérieure (1) et und bague extérieure (2) qui présentent entre elles un mouvement ralatif de rotation et qui sont en appui, l'une par rapport à l'autre, par l'Intermédiaire de films de fluide sous pression s'étendant axialement (6c) et radialement (6a, 6b), lesdits films (6a, 6b, 6c) étant indépendants les uns des autres. En regard de chaque face d'appui radiale ou axiale débouche un injecteur de fluide (12a, 12b, 12c) à orifice calibré relié par un conduit (7) à une source de fluide sous pression.

Fig.2

EP 0 030 877 A1

La présente invention a pour objet un perfectionnement aux dispositifs rotatifs notamment aux couronnes d'orientation constituées d'une bague intérieure et d'une bague extérieure présentant entre elles un mouvement relatif de rotation.

Dans les dispositifs de rotation actuellement connus et qui sont utilisés notamment dans des couronnes d'orientation, on utilise des organes roulants notamment des billes ou des rouleaux qui se déplacent sur des pistes de roulement conçues à cet effet qui assurent de ce fait la rotation de l'une des parties ou bague par rapport à l'autre partie restant fixe.

Une telle couronne d'orientation comporte donc en général :
- une bague extérieure avec chemin de roulement,
- une bague intérieure avec chemin de roulement,
- un dispositif de rotation constitués d'organes roulants,
- un dispositif de fixation.

La partie fixe est solidaire d'un bâti et la partie mobile est solidaire d'une structure. De ce fait et suivant le principe exposé ci-dessus, la partie mobile peut donc tourner par rapport à la partie fixe. Chacune des bagues extérieure et intérieure peut être réalisée en une ou plusieurs pièces circulaires ou de toute autre forme. De plus chacune de ces bagues peut ou non comporter une denture servant à son propre entrainement et éventuellement à l'entrainement d'un autre organe en rotation. Enfin le dispositif étant réversible, chacune de ces deux bagues constituer indifféremment la partie fixe ou la partie mobile de l'ensemble.

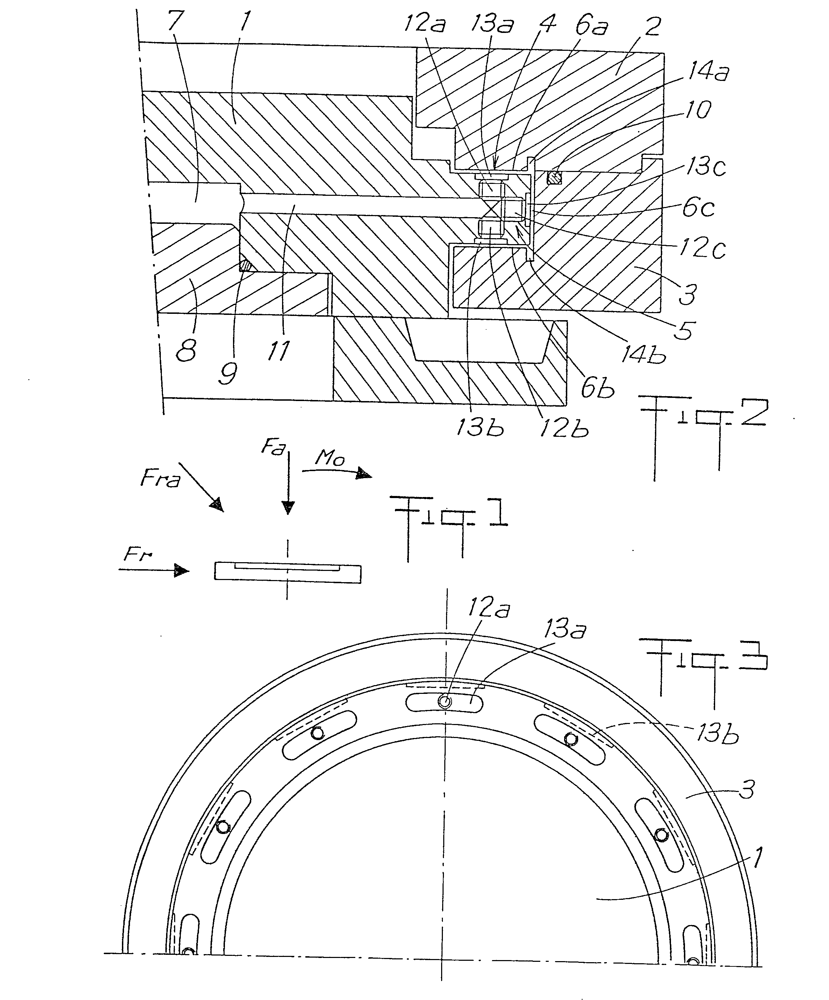

Selon les charges supportées par la machine sur laquelle elle est montée, la couronne
d'orientation est soumise à des charges importantes
qui sont représentées à la figure 1 et qui comprennent des charges axiales Fa, radiales Fr, des
charges combinées Fra et des moments de renversement ou de basculement Mo, eux-mêmes engendrés par
des efforts axiaux ou radiaux.

Un inconvénient majeur du dispositif
de rotation comportant des organes roulants, réside
dans le fait que ces organes roulants entrainent ,
du fait même du glissement ou du frottement qui
accompagne toujours le roulement, un couple résistant
de rotation.

Cet inconvénient commun à tous les
types de couronne, avec ou sans denture, est particulièrement mis en évidence dans le cas de couronnes
sans denture, où la rotation est liée à un effort
manuel. De toute façon , ce couple résistant doit
être le plus faible possible pour tous les types
de couronne, où le dispositif de rotation par organes
roulants entraine des couples résistants non négligeables.

Un second inconvénient réside dans
le fait que les glissements et frottements occasionnés
par les organes roulants sur les pistes de chemin de
roulement, créent et engendrent des détériorations
possibles desdits chemins.

Il en résulte une usure des pièces de
roulement, des déformations des chemins de roulement,
un marquage ou une corrosion des matières en contact.

Un troisième inconvénient résultant
parfois des détériorations éventuelles des pistes de
roulement, réside dans le fait que les couronnes
d'orientation prévues et conçues avec un minimum de
jeu de fonctionnement présentent toujours une augmentation sensible de ces jeux en cours d'utilisation.

Une valeur maximale étant d'ailleurs fixée pour acceptation ou non de la couronne sur la machine, ou pour son remplacement éventuel en cours d'utilisation. Le système de rotation avec des organes roulants entraîne toujours des pressions superficielles très élevées qui détériorent les pistes de roulement.

On connaît également des dispositifs de rotation hydrostatiques ou hydrodynamiques dans lesquels, les efforts sont absorbés suivant une direction à la fois, c'est-à-dire soit radiale dans le cas d'un palier soit axiale dans le cas d'une butée.

Ces dispositifs de rotations hydrostatiques ou hydrodynamiques ne permettent pas comme dans les couronnes d'orientation suivant l'invention de subir à la fois des charges radiales axiales ou combinées et des moments de renversement ou de basculement.

On connait également le brevet français 73/02 667 qui concerne un palier hydrostatique en couronne dans lequel des poches d'huiles sont alimentées par des conduits ne comportant pas d'injecteurs comme dans la présente invention. Or, ces dispositifs ne peuvent fonctionner convenablement en l'absence d'injecteurs présentant un calibrage, une précision et un nombre dans les alvéoles bien définis.

Conformément à la présente invention les bagues extérieure et intérieure de la couronne d'orientation sont en appui l'une par rapport à l'autre, par l'intermédiaire de films de fluide sous pression s'étendant axialement et radialement, lesdits films fluidiques étant indépendants les uns des autres, et en regard de chaque face d'appui radiale ou axiale débouche un injecteur de fluide à orifice calibré relié par un conduit à une source de fluide sous pression.

Le dispositif suivant l'invention permet une précision d'utilisation plus grande que dans le cas de moyens utilisant des organes roulants par suite de l'uniformité du mouvement.

Ce dispositif dont la liaison entre la bague tournante et la bague fixe, n'est pas mécanique permet la suppression des à coups et des sautillements. Le dispositif suivant l'invention permet le maintien de la propreté des pistes de chemin de roulement même en cas d'humidité et il peut assurer de ce fait également sa propre lubrification.

Suivant un avantage de l'invention le dispositif permet des démarrages progressifs et doux même après un arrêt prolongé.

Par ailleurs et du fait même des coefficients de glissement très faibles du fluide sur la matière de contact il est possible d'obtenir des couples résistants négligeables et des couples d'entrainement très faibles même à des charges élevées.

Le dispositif suivant l'invention, diminuant considérablement les pressions de surface et les pressions induites (Hertz) ne nécessite pas des duretés superficielles élevées des pistes de chemin de roulement et par conséquent les traitements superficiels ne sont pas nécessaires ainsi que l'emploi d'aciers nobles.

Les couronnes d'orientation à dispositif fluidique suivant l'invention peuvent être réalisées en n'importe quelle matière.

Le dispositif de rotation suivant l'invention du fait même que les organes roulants sont remplacés par un fluide sous pression, ne provoque pas de détériorations des chemins de roulement ou des usures de pistes.

Le dispositif de rotation suivant l'invention évite que l'assemblage ne prenne du jeu croissant avec le temps, car les pistes de chemins de roulement ne présentent qu'une usure négligeable.

Enfin le type de couronne d'orientations à dispositif fluidique peut être utilisé pour n'importe quel type d'application et peut être monté en lieu et place d'une couronne traditionnelle.

D'autres caractéristiques et avantages de l'invention seront mieux compris à la lecture de la description qui va suivre de plusieurs modes de réalisation et en se référant aux dessins annexés, dans lesquels :

- la figure 1 est une vue schématique d'une couronne d'orientation et des charges qui sont susceptibles de lui être appliquées.
- la figure 2 est une demi-vue en coupe radiale d'un mode de réalisation d'une couronne d'orientation perfectionnée suivant l'invention.
- la figure 3 est une vue en plan de la couronne avec la demi-bague extérieure enlevée.
- la figure 4 est une demi-vue en coupe radiale d'une couronne d'orientation montrant le retour du fluide à la pression nulle.
- la figure 5 est une demi-vue en coupe radiale d'une variante de réalisation d'une couronne comportant des films fluidiques inclinés.

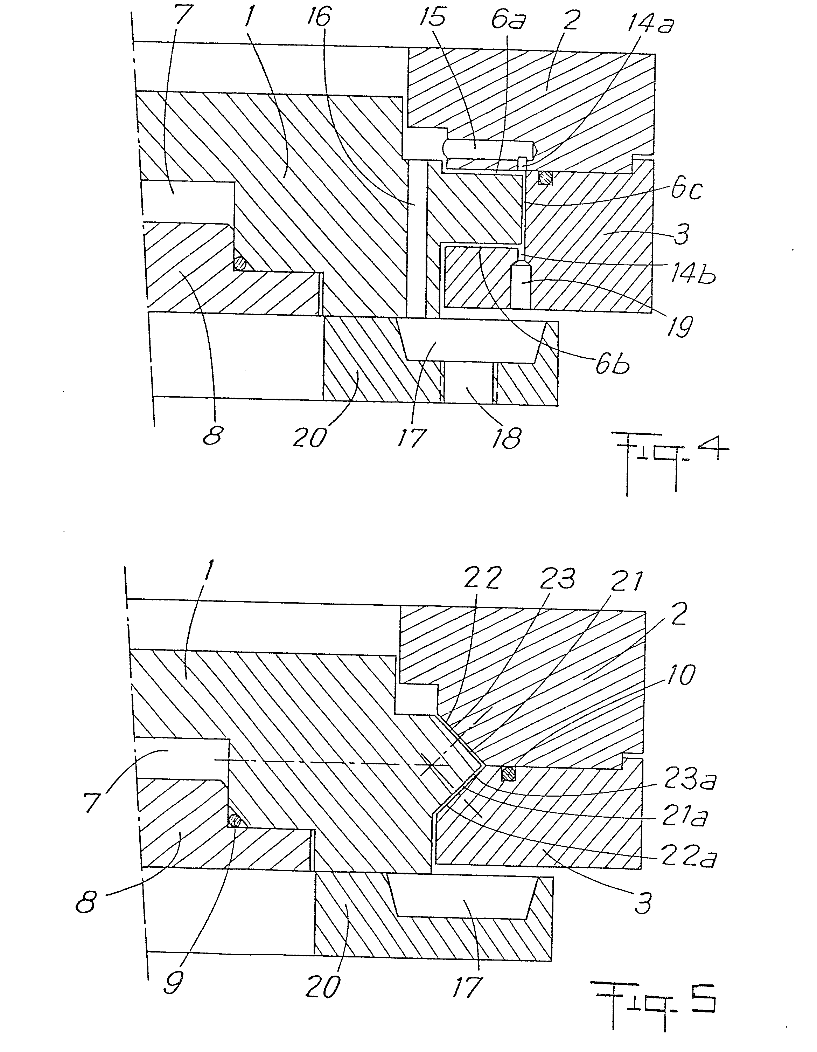

A la figure 2 on a représenté une couronne d'orientation suivant l'invention qui comprend une bague intérieure 1 qui est fixé et solidaire notamment d'un bâti, ladite bague intérieure étant engagée entre deux demi-bagues supérieure 2 et inférieure 3 qui constituent une bague rotative présentant une gorge circulaire 4 dans laquelle est engagé un bord circulaire 5 de la bague intérieure 1, un joint d'étanchéité 10 étant disposé entre les deux demi-bagues. L'espace ménagé entre la gorge 4 et le bord 5 est alimenté en fluide sous pression notamment de l'huile ,de manière à constituer entre la bague intérieure 1 et la bague extérieure 2,3 des films d'huile radiaux 6a, 6 b et un film axial 6 c, de telle sorte que la bague extérieure est en appui sur la bague intérieure 1 par l'intermédiaire des films d'huile 6a, 6b, 6 c.

Ces films d'huile sont alimentés à partir d'un collecteur de fluide 7 ménagé entre la bague interne 1 et un couvercle 8 monté sur ladite bague avec interposition d'un joint d'étanchéité 9, ledit collecteur 7 étant relié à une source de fluide sous pression non représenté au dessin et à des conduits 11 d'arrivée de fluide répartis sur le pourtour de la bague intérieure et qui débouchent par des injecteurs 12a 12b, et 12c présentant des orifices calibrés dans les alvéoles 13a, 13b, 13c. Ce collecteur 7 peut être également indépendant du système de rotation lui-même, l'arrivée du fluide étant alors réalisée par des tuyaux reliés directement à chaque conduit 11.

Les alvéoles 13a, 13b qui sont prévues dans les faces radiales du bord 5, alimentent en fluide sous pression les films fluidiques 6a et 6b s'étendant radialement alors que les alvéoles 13c prévues dans la face axiale du bord 5 alimentent en fluide sous pression le film fluidique 6c s'étendant axialement.

Bien entendu les alvéoles 13a, 13b et 13c sont réparties sur le pourtour de la bague intérieure 1 ainsi qu'il est représenté à la figure 3.

Entre les films fluidiques radiaux 6a et 6b et le film fluidique axial 6c sont disposés des canaux de retour circulaire de fluide 14a, 14b dans lesquels la pression est faible et proche de la pression atmosphérique la chute de pression entre le film de fluide et le canal de retour se produisant sur une distance extrêmement réduite. De ce fait il résulte que les films de fluides 6a, 6b, 6c sont totalement isolés les uns des autres.

Le canal de retour de fluide 14a est relié par des conduits 15 et 16 à un collecteur 17 (fig.2 et 4) de fluide à pression faible qui est relié par un conduit 18 à une bâche de fluide.

Par ailleurs le canal de retour 14 b est relié par des conduits 19 au collecteur 17 de fluide qui est constitué d'une gorge circulaire usinée dans une bague 20 fixée sur la bague intérieure 1.

Les conduits 15, 16 et 19 sont répartis sur le pourtour des bagues intérieure et extérieure afin d'obtenir une répartition de l'écoulement du fluide dans le collecteur 17.

A la figure 5, on a représenté une variante de réalisation dans laquelle la bague intérieure 1 présente des faces inclinées 21, 21 a situées en regard de faces inclinées 22, 22 a ménagées respectivement sur la bague extérieure supérieure 2 et sur la bague extérieure inférieure 3.

Les faces inclinées 21, 21a et 22, 22a font un angle déterminé avec les faces radiales et axiales de la couronne, de telle sorte que les films de fluide 23, 23 a qui sont disposés d'une part, dans l'espace entre les faces 21 et 22 et d'autre part, dans l'espace entre les faces 21 a et 22 a, sont également inclinés et alimentés à partir d'alvéoles inclinées prévues dans les faces 21, 21 a et 22, 22 a, des bagues intérieure et extérieure.

L'alimentation en fluide sous pression des alvéoles est réalisée à partir du collecteur 7 par des conduits radiaux et le retour du fluide à la pression faible s'effectue également par des canaux circulaires et des conduits débouchant dans le collecteur de retour de fluide 17, comme il a été décrit ci-dessus.

Bien entendu, l'invention n'est pas limitée aux modes de réalisation représentés et les alvéoles pourraient se trouver sur la bague extérieure au lieu de la bague intérieure et le collecteur serait disposé différemment dans ce cas notamment à l'extérieur de la couronne

De même la bague intérieure 1 pourrait être rotative alors que la bague extérieure serait fixe.

Le groupe d'alimentation en fluide sous pression notamment le groupe hydraulique de puissance qui est extérieur ou non à la couronne, permet la mise en pression d'une série d'alvéoles radiales ou axiales ou de toutes les alvéoles en même temps.

Le fluide comprimé dans l'espace entre les deux bagues, selon une pression et un débit parfaitement définis permet de déterminer l'effort ou les efforts que peut supporter la couronne. La direction de ces efforts est donnée par le type d'alvéoles mises en pression, et l'intensité de ces efforts dépend des paramètres utilisés pour le calcul, notamment la pression d'arrivée du fluide, le débit du fluide, le nombre d'alvéoles, la surface de contact, l'espace entre bagues etc..

Bien entendu diverses modifications peuvent être apportées par l'homme de l'art aux dispositifs ou procédés qui viennent d'être décrits uniquement à titre d'exemple non limitatif , sans sortir du cadre de l'invention.

REVENDICATIONS

1.      Perfectionnement aux dispositifs rotatifs notamment aux couronnes d'orientation constituées d'une bague extérieure et d'une bague intérieure présentant entre elles un mouvement relatif de rotation, caractérisé en ce que les deux bagues 1, 2 sont en appui l'une par rapport à l'autre, par l'intermédiaire de films de fluide 6a, 6b, 6c sous pression s'étendant axialement et radialement, lesdits films fluidiques étant indépendants les uns des autres et en ce que en regard de chaque face d'appui radiale ou axiale débouche un injecteur de fluide 12 a, 12 b, 12 c à orifice calibré relié par un conduit 7 à une source de fluide sous pression.

2.      Perfectionnement aux dispositifs rotatifs suivant la revendication 1, caractérisé en ce que les films fluidiques 23, 23a indépendants les uns des autres sont inclinés par rapport aux directions radiales et axiales des deux bagues 1, 2.

3.      Perfectionnement aux dispositifs rotatifs suivant les revendications 1 et 2, caractérisé en ce qu'entre les films fluidiques radiaux, axiaux 6 a, 6 b, 6 c et inclinés 23, 23 a sont disposés des canaux de retour 14 a, 14 b du fluide dans lesquels la pression du fluide est faible, la chute de pression entre le film de fluide et le canal de retour 14 a, 14 b se produisant sur une distance extrêmement réduite.

4.      Perfectionnement aux dispositifs rotatifs suivant la revendication 3, caractérisé en ce que les canaux de retour 14 a, 14 b du fluide sont reliés par des conduits 15, 16, 19 répartis sur le pourtour de la couronne à un collecteur annulaire 17 de fluide à pression faible.

5.      Perfectionnement aux dispositifs rotatifs suivant la revendication 1, caractérisé en ce qu'autour de l'orifice de chaque injecteur 12 a, 12 b, 12 c, est ménagée une alvéole 13 a, 13 b, 13 c dans la paroi.

6.        Perfectionnement aux dispositifs rotatifs
suivant la revendication 1, caractérisé en ce que le
collecteur d'admission 7 dans lequel débouchent tous
les conduits 11 d'injection de fluide et qui est relié
à la source de fluide comprimé est constitué d'une enceinte
ménagée dans la partie centrale de la bague fixe 1.

7.        Perfectionnement aux dispositifs rotatifs
suivant la revendication 1, caractérisé en ce que le
collecteur d'admission 4 dans lequel débouchent les
conduits d'injection 11 de fluide, et qui est relié à
la source de fluide comprimé est constitué d'une enceinte
extérieure au système de rotation.

0030877

1/2

Fig. 2

Fra    Fa    Mo

Fr

Fig. 1

Fig. 3

Fig. 4

Fig. 5

Office européen
des brevets

**RAPPORT DE RECHERCHE EUROPEENNE**

EP 80 40 1662

| Catégorie | Citation du document avec indication, en cas de besoin, des parties pertinentes | Revendication concernée | CLASSEMENT DE LA DEMANDE (Int. Cl. 3) |
|---|---|---|---|
| **DOCUMENTS CONSIDERES COMME PERTINENTS** | | | |
| X | FR - A - 1 548 785 (BABCOCK & WILCOX)  <br> * En entier * | 1-3,5, 7 | F 16 C 32/06 |
| X | FR - A - 1 576 913 (FIRMA HEIDEN-HAIN) <br> * En entier * | 1,2,4, 7 | |
| X | FR - A - 2 135 415 (CIT-ALCATEL) <br> * En entier * | 1,3,6 | DOMAINES TECHNIQUES RECHERCHES (Int. Cl. 3) |
| | FR - A - 1 088 290 (R.E.P.) <br> * En entier * | 1,3-5, 7 | F 16 C 17/00 |
| A | FR - A - 2 341 776 (TOYODA-KOKI) | | |
| A | FR - A - 2 018 248 (TOYODA-KOKI) | | |
| A | FR - A - 1 400 688 (SCHWARTZMAN) | | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| X | Le présent rapport de recherche a été établi pour toutes les revendications | | |
|---|---|---|---|
| Lieu de la recherche <br> La Haye | Date d'achèvement de la recherche <br> 09-02-1981 | Examinateur <br> BALDWIN | |

OEB Form 1503.1  06.78